# EUROPÄISCHE PATENTSCHRIFT

(11) **EP 1 511 656 B1**
(45) Veröffentlichungstag und Bekanntmachung des Hinweises auf die Patenterteilung: **11.11.2009**
(21) Anmeldenummer: 03709612.0
(22) Anmeldetag: 13.02.2003
(51) Int. Cl.: B60R 16/02, B60R 21/01, H04L 25/02

(54) **STEUERGERÄT IN EINEM FAHRZEUG UND SENSOR**
CONTROL DEVICE IN A VEHICLE AND SENSOR
CALCULATEUR ELECTRONIQUE EMBARQUE DANS UN VEHICULE ET CAPTEUR

(30) Priorität: 25.05.2002 DE 10223364
(43) Veröffentlichungstag der Anmeldung: 09.03.2005
(73) Patentinhaber: ROBERT BOSCH GMBH, 70442 Stuttgart (DE)
(72) Erfinder: STEIGER, Eckard, 70195 Stuttgart (DE); SCHUMACHER, Hartmut, 71691 Freiberg (DE)
(86) Internationale Anmeldenummer: PCT/DE2003/000428
(87) Internationale Veröffentlichungsnummer: WO 2003/099616

(56) Entgegenhaltungen:
- EP-A- 0 324 067
- EP-A- 0 862 290
- EP-A- 0 989 032
- DE-A- 2 503 679
- DE-A- 4 006 124

## Beschreibung

### Stand der Technik

Die Erfindung geht aus von e-inem Steuergerät für ein Fahrzeug nach der Gattung des unabhängigen Patentansprüche.

Aus der gattungsbilden derDE 25 03 679 A ist es bekannt, eine Ringleitung mit Verbrauchern vorzusehen, wobei die Ringleitung eine Taktleitung aufweist, auf die ein Takt gegeben wird, der beispielsweise mittels eines Multivibrators erzeugt wird. Anhand des Takts kann ein Verbraucher erkennen, dass er aktiviert werden soll.

Es ist bekannt, dass nun zentral von einem Prozessor im Steuergerät der Takt für die angeschlossenen Sensoren erzeugt wird, der für den Sensorbetrieb und dabei vorzugsweise für die Sensormessung verwendet wird. Dies reduziert den Schaltungsaufwand, da damit jedem Sensor kein eigenes Mittel zur Takterzeugung, also jeweils ein beispielsweise sensorinterner Oszillator, zugeordnet werden muss. Vielmehr kann auch das zentral angeordnete Mittel zur Takterzeugung bezüglich der Zuverlässigkeit und Frequenzschärfe wegen allgemein höherer Anforderungen an den Gesamt-System-Takt genauer ausgeführt werden. Damit werden insbesondere bei Rückhaltesystemen, bei denen dieses Steuergerät und der Sensor eingesetzt werden, genauere Auslösezeiten erreicht, da die Einstellungsschärfe die von der Toleranz der Sensorwerte abhängt, verbessert werden. Vor allem die Applikation auf verschiedene Crash- und Fahrzeugtypen wird dadurch erleichtert. Dabei können Genauigkeiten von < 10⁻⁴% erreicht werden. Insbesondere, wenn hierbei ein Quarz-Oszillator verwendet wird. Auch ein zentral angeordneter Keramikresonator weist eine geringe Toleranz mit typischerweise von < 0,3% auf. Diese Genauigkeiten erlauben eine Beschränkung von Toleranzfenstern einer Ausgangsfiltereckfrequenz auf ca. < 5%. Damit wird die Sensormessgenauigkeit erhöht und damit die Rückhaltesystemfahrzeugapplizierbarkeit erleichtert. Anstatt bei Rückhaltesystemen ist jedoch auch der Einsatz des erfindungsgemäßen Steuergeräts bzw. des erfindungsgemäßen Sensors in anderen fahrzeugtechnischen Einsatzgebieten möglich. Ein Beispiel hierfür ist die Fahrdynamikregelung.

Erfindungsgemäß ist, dass die Mittel zur Erzeugung des wenigstens einen Taktes eine Schwingungserzeugungsschaltung, Mittel zur Frequenzvervielfachung und erste Mittel zur Taktteilung aufweisen. Damit kann der benötigte Takt für die einzelnen Sensoren oder Sensorengruppen von der zentral erzeugten Schwingung abgeleitet werden. Dies wird vorzugsweise digital durchgeführt. Die Schwingungserzeugungsschaltung weist dabei einen Quarz-Oszillator oder einen Keramikresona- tor auf. Als Mittel zur Frequenzvervielfachung wird typischerweise eine Phasenregelschleife verwendet.

Durch die in den abhängigen Ansprüchen aufgeführten Maßnahmen und Weiterbildungen sind vorteilhafte Verbesserungen des in den unabhängigen Ansprüchen angegebenen Steuergeräts bzw. Sensors möglich. Die ersten Mittel zur Taktteilung weisen dabei einen Prescaler mit wenigstens, einem Register auf, wobei das wenigstens eine Register das jeweilige Teilungsverhältnis aufweist. Werden beispielsweise drei unterschiedliche Takte für unterschiedliche Sensoren benötigt, so sind drei Register notwendig, um die entsprechenden Taktverhältnisse herzustellen.

Der Prozessor, der diese unterschiedlichen Takte bereitstellt, weist vorteilhafter Weise auch Mittel zur Bereitstellung unterschiedlicher Pegel für die Taktsignale auf.
Unterschiedliche Sensoren mögen unterschiedliche Eingangssignale benötigen und entsprechend sollten solche Pegel dann bereitgestellt werden.

Der Sensor weist Weise Mittel zur Taktteilung und zur Phasenmodegeneration auf, die zur Aufbereitung von sensorinternen Taktsignalen dienen. Phasenmodegeneration bedeutet, dass nicht alle Taktsignale die aufeinander folgen, verwendet werden, sondern beispielsweise nur jedes zweite, jede vierte etc. Dies ist insbesondere bei mikromechanischen Sensoren, die nach dem Differenzkapazitätsprinzip funktionieren, zum Messbetrieb notwendig.

Im allgemeinen ist für den Sensor eine eigene Taktleitung notwendig. D.h. Sensoren mit synchroner Digitalschnittstelle werden zwei Takte zugeführt, der die Erfindung betreffende und der Schnittstellen-Takt. Es ist aber auch möglich, den Sensor in diesem Fall so auszulegen, dass der Schnittstellen-Takt auch für die Mess- und Signalverarbeitungsfunktion als Basis dient. Damit entfällt eine zusätzliche Taktleitung dann komplett.

Der mit dem Prozessor-verbundene Sensor kann sich einerseits im Steuergerät oder andererseits außerhalb des Steuergeräts befinden. Dabei ist eine Verbindung über eine unidirektionale oder bidirektionale Datenleitung möglich. Auch eine Bus-Verbindung zwischen Prozessor und Sensor ist hierbei möglich, wobei bemerkt werden muss, dass der Takt, der vom Prozessor zum Sensor übertragen wird, zur Verarbeitung der Mess-Signale im Sensor dient und nicht zur Datenübertragung.

Die Taktleitungen, die vom Prozessor zu den Sensoren führen, werden an entsprechende Pins der Sensoren angeschlossen.

### Zeichnung

Ausführungsbeispiele der Erfindung sind in der Zeichnung dargestellt und werden in der nachfolgenden Beschreibung näher erläutert.

Es zeigen
- Figur 1: eine erste Konfiguration vom Steuergerät und den Sensoren
- Figur 2: eine zweite Konfiguration vom Steuergerät und den Sensoren,
- Figur 3: ein Blockschaltbild der Taktgewinnung im Prozessor,
- Figur 4: ein Blockschaltbild der Signalverarbeitung im Sensor,
- Figur 5: Messelektroden zum Anschluss an ein Sensorelement,
- Figur 6: eine Phasenmodengeneration

### Beschreibung

Üblicherweise werden bei Rückhaltesystem-Elektroniken, der für den Sensorbetrieb benötigte Takt, für jeden Sensor exklusiv erzeugt, d.h. jedem Sensor ist ein eigener Oszillator zur Takterzeugung zugeordnet. Im Allgemeinen ist ein Oszillator in den Sensorauswerte-IC integriert. Dieser Sensor-ASIC leistet die Signalabtastung, Messung, Aufbereitung und Vorverarbeitung, beispielsweise die Filterung oder Offset-Kompensation. Typischerweise werden sogenannte RC-on-Chip-Oszillatoren mit Schwingfrequenzen im ein- bis mehrfachen Hundert-Kilohertz-Bereich eingesetzt. Das Taktsignal bzw. die daraus abgeleiteten Takte werden für die getaktete Signalmessung, für die Filterung, die Offset-Regelung u.s.w. benötigt.

Die Realisierung eines Oszillators für jeden Sensor und der für den Oszillator benötigten Schaltung und Frequenzabgleichstrukturen bedeutet einen Schaltungsaufwand und damit Kosten. Weiterhin wird die Oszillatorschaltung aus Kosten- bzw. aus Darstellbarkeitsgründen in den verwendeten Halbleiterprozessen im Allgemeinen als in der Frequenzschärfe relativ ungenauer RC-Oszillator realisiert. Damit sind notwendiger Weise zu berücksichtigende Toleranzen von typisch ca. 10% über Streuung, Abgleichungsgenauigkeit, Temperatur und Lebensdauer verbunden. In der Sensorapplikation wirkt sich diese Unschärfe der Zeitbasis über ein entsprechend großes Toleranzfenster der Ausgangsfiltercharakteristik, Toleranz der Eckfrequenz typisch ca ± 20%, aus. Speziell die Eckfrequenztoleranz geht direkt in die Einstellungsschärfe der Rückhaltesystem-Auslösezeiten ein. Eine Applikation auf verschiedene Crash- und Fahrzeugtypen wird entsprechend erschwert und ungenau.

Erfindungsgemäß wird nun zentral in einem Steuergerät der Takt für die angeschlossenen Sensoren, und zwar für deren Betrieb und dabei insbesondere die Messung, erzeugt. Damit können die einzelnen Oszillatorschaltungen in den einzelnen Sensoren entfallen. Als typische Sensoren werden hier Beschleunigungssensoren und Drehratensensoren verstanden. Aber auch Druck- und Temperatursensoren sind für diese Erfindung einsetzbar. Denn all diesen Sensoren ist gemein, dass sie in einem Messtakt die Mess-Signale erzeugen und vorverarbeiten.

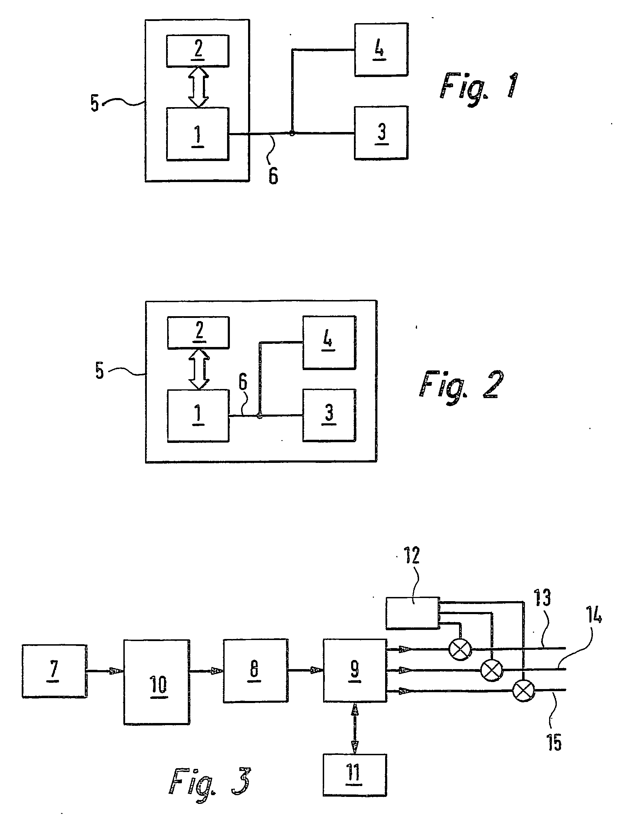

Figur 1 zeigt eine erste grundsätzliche Konfiguration von einem Steuergerät 5 und angeschlossenen Sensoren 3 und 4. Hier sind die Sensoren 3 und 4 außerhalb des Steuergeräts 5 angeordnet. Der Einfachheit halber sind im Steuergerät 5 lediglich ein Prozessor 1 und ein über einen Datenein- und Ausgang verbundener Speicher 2 dargestellt. Es sind natürlich noch weitere Komponenten im Steuergerät 5 enthalten. Über eine Datenleitung 6 sind die Sensoren 3 und 4 mit dem Prozessor 1 verbunden. Der Prozessor 1 erzeugt zentral mit Mitteln zur Takterzeugung den Takt für die Sensoren 4 und 3, wenn notwendig über einen geeigneten Schnittstellen-IC. Mit diesem Takt führen die Sensoren 3 und 4 ihre Messung und Vorverarbeitung dieser Messwerte aus. Die Datenleitung 6 kann als Bus ausgeführt sein, es können aber auch für jeden der Sensoren 3 und 4 gesonderte Datenleitungen vorgesehen sein. Es kann lediglich ein Sensor, es können aber auch mehr als die hier dargestellten zwei Sensoren an den Prozessor 1 angeschlossen sein. Die Sensoren 3 und 4 können gleichen oder unterschiedlichen Typs sein.

Figur 2 zeigt eine zweite grundsätzliche Konfiguration von Steuergerät 5 und den Sensoren 3 und 4. Hier sind die Sensoren 3 und 4 innerhalb des Steuergeräts 5 angeordnet und über die Datenleitung 6, die zur Übertragung des zentralen Takts vom Prozessor 1 dient, mit dem Prozessor 1 verbunden. Es ist auch eine Kombination aus den Konfigurationen aus Figur 1 und Figur 2 möglich, wobei Sensoren innerhalb des Steuergeräts 5 und außerhalb des Steuergeräts 5 angeordnet sein können.

Figur 3 zeigt als Blockschaltbild, wie die Mittel zur Takterzeugung im Prozessor 1 arbeiten. Eine Schwingungserzeugungsschaltung 7 dient zur Generation einer Schwingung. Diese wird von einer Phasenregelschleife 10, die mit einem Oszillator kombiniert ist, bezüglich der Frequenz vervielfacht. Ein Anälog-Digital-Wandler 8 führt dann zur Digitalisierung des frequenzvervielfachten Signals. Ein Prescaler 9 führt mittels Registern 11 und interner Logik die Ableitung der einzelnen Takte für die Sensoren durch. Dafür sind in den Registern 11 die Taktverhältnisse abgespeichert, in denen die frequenzvervielfachte Frequenz geteilt werden muss, um die einzelnen drei Takte, die hier erzeugt werden sollen, zu generieren.

Ein Baustein 12 sorgt dafür, dass die einzelnen drei Takte mit einem jeweiligen Pegel versehen werden, der für die Aufnahme durch die Sensoren notwendig ist. Es liegen dann am Ausgang dieser Mittel zur Takterzeugung drei Takte 13, 14 und 15 vor.

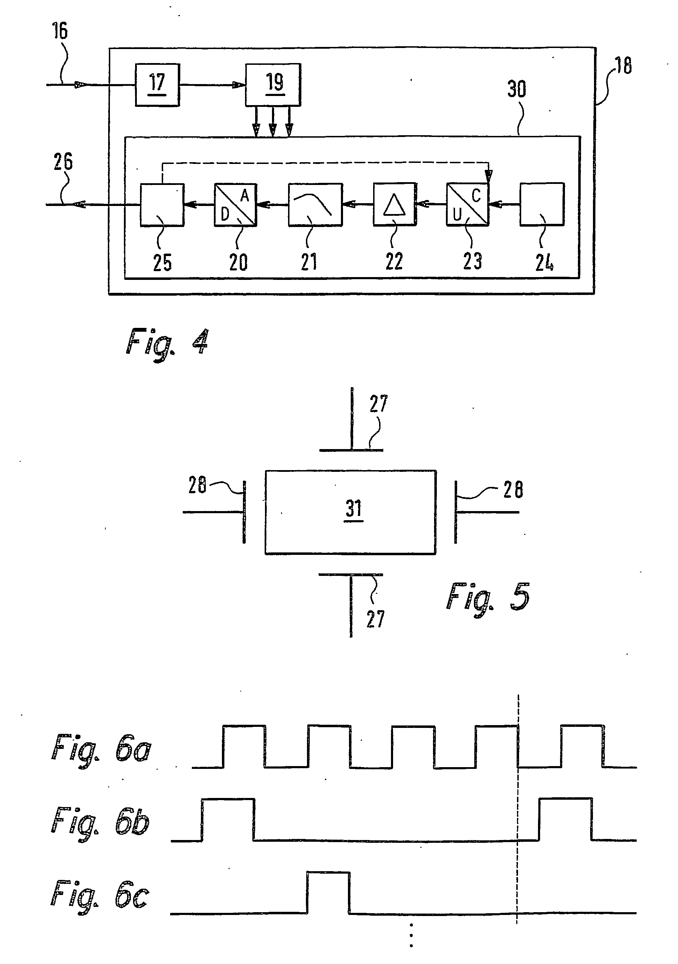

In Figur 4 wird mittels eines Blockschaltbilds dargestellt, wie ein Sensor 18 ein Taktsignal 16 aufnimmt und damit die Verarbeitung des Sensorsignals durchführt. Das Taktsignal 16 wird von einem Empfängerbaustein 17 im Sensor empfangen und an einen Baustein 19 weitergegeben, der einen entsprechenden Takt davon abteilt und eine Phasenmodengeneration durchführt, d.h. dass für bestimmte Anwendungen nur das jeweils erste, zweite, dritte oder vierte Taktsignal verwendet wird. Die Taktsignale werden der Messkette 30 Sensorelement 24 (z.B. mikromechanisches Feder-Masse-System zur Beschleunigungsmessung), Ladungs-Spannungswandler 23, Messverstärker 22, Filter 21, Analog-Digitalwandler 20 und Logikbaustein 25 (Offsetregelung, weitere Vorverarbeitung) zugeführt, wo sie auf unterschiedliche Art als Zeitbasis für z.B. Abtast- und Wandlungsvorgänge oder als Modulationssignale eingesetzt werden. Das Signal am Ende der Messkette wird dann über die Leitung(en) 26 als Analog- oder Digitalsignal zum Prozessor 1 übertragen.

Figur 5 zeigt schemahaft, dass eine seismische Masse 31 von Elektroden 27 und 28 umgeben ist, um beispielsweise über eine Kapazitätsänderung Beschleunigungen in X-Y-Ebene aufzunehmen. Für diesen Zweck ist die Phasenmodengeneration notwendig. Figur 6 zeigt diese Phasenmodengeneration. Das vom Baustein 19 empfangene Taktsignal A zeigt hier vier Taktimpulse. Die Phasenmodengeneration erzeugte jedoch ein erstes Signal B, bei dem nur der erste Taktimpuls verwendet wird und ein Signal C, bei dem nur der zweite Taktimpuls verwendet wird. Ein oder mehrere Takte wie dieser weden zum Ausmessen der Kapazitäten der Elektroden 27 und 28 benötigt.

## Patentansprüche

1. Steuergerät (5) für ein Fahrzeug mit einem Prozessor (1), wobei der Prozessor (1) mit wenigstens einem Sensor (3, 4) verbindbar ist, wobei der Prozessor (1) Mittel (7 bis 15) zur Erzeugung wenigstens eines Taktes eine Schwingungserzeugungsschaltung (7) für den wenigstens einen Sensor (3, 4) aufweist, wobei der wenigstens eine Sensor (3, 4, 18) derart ausgebildet ist, dass der wenigstens eine Sensor (3, 4, 18) den Takt für einen Sensorbetrieb, vorzugsweise der Sensormessung, verwendet, **dadurch gekennzeichnet, dass** die Mittel (7 bis 15) zur Erzeugung des wenigstens einen Taktes weitere Mittel (10) zur Frequenzvervielfachung und erste Mittel (9, 11) zur Taktteilung aufweisen, wobei der Prozessor (1) für unterschiedliche Sensoren (3, 4) unterschiedliche Takte bereitstellt.

2. Steuergerät nach Anspruch 1, **dadurch gekennzeichnet, dass** die Schwingungserzeugungsschaltung (7) einen Quarz-Oszillator oder einen Keramikkondensator aufweist.

3. Steuergerät nach Anspruch 1, **dadurch gekennzeichnet, dass** die Mittel (10) zur Frequenzvervielfachung eine Phasenregelschleife aufweisen.

4. Steuergerät nach Anspruch 1, **dadurch gekennzeichnet, dass** die ersten Mittel (9, 11) zur Taktteilung einen Prescaler (9) mit wenigstens einem Register (11) aufweisen, wobei das wenigstens eine Register (11) ein jeweiliges Teilungsverhältnis aufweist.

5. Steuergerät nach einem der vorherigen Ansprüche, **dadurch gekennzeichnet, dass** der Prozessor Mittel zur Bereitstellung unterschiedlicher Pegel für den wenigstens einen Takt aufweiset.

## Claims

1. Controller (5) for a vehicle with a processor (1), it being possible for the processor (1) to be connected to at least one sensor (3, 4), with the processor (1) having means (7 to 15) for generating at least one clock pulse, an oscillation-generating circuit (7), for the at least one sensor (3, 4), with the at least one sensor (3, 4, 18) being designed in such a way that the at least one sensor (3, 4, 18) uses the clock pulse for sensor operation, preferably sensor measurement, **characterized in that** the means (7 to 15) for generating the at least one clock pulse have further means (10) for frequency multiplication and first means (9, 11) for clock division, with the processor (1) providing different clock pulses for different sensors (3, 4).

2. Controller according to Claim 1, **characterized in that** the oscillation-generating circuit (7) has a quartz oscillator or a ceramic capacitor.

3. Controller according to Claim 1, **characterized in that** the means (10) for frequency multiplication have a phase locked loop.

4. Controller according to Claim 1, **characterized in that** the first means (9, 11) for clock division have a prescaler (9) with at least one register (11), with the at least one register (11) having a respective division ratio.

5. Controller according to one of the preceding claims, **characterized in that** the processor has means for providing different levels for the at least one clock pulse.

## Revendications

1. Appareil de commande (5) pour véhicule, doté d'un processeur (1), le processeur (1) pouvant être relié à au moins un détecteur (3, 4), le processeur (1) présentant des moyens (7 à 15) de formation d'au moins une cadence d'horloge d'un circuit oscillant (7) prévu pour le ou les détecteurs (3, 4), le ou les détecteurs (3, 4, 18) étant configurés de telle sorte que le ou les détecteurs (3, 4, 18) utilisent la cadence d'horloge pour un fonctionnement du détecteur, de préférence pour la mesure par le détecteur,
**caractérisé en ce que**
les moyens (7 à 15) de production de la ou des cadences d'horloge présentent d'autres moyens (10) de multiplication de fréquence et des premiers moyens (9, 11) de division de cadence d'horloge et
**en ce que** le processeur (1) délivre différentes cadences d'horloge aux différents détecteurs (3, 4).

2. Appareil de commande selon la revendication 1, **caractérisé en ce que** le circuit oscillant (7) présente un oscillateur à quartz ou un condensateur céramique.

3. Appareil de commande selon la revendication 1, **caractérisé en ce que** les moyens (10) de multiplication de fréquence présentent une boucle de régulation de phase.

4. Appareil de commande selon la revendication 1, **caractérisé en ce que** les premiers moyens (9, 11) de division de cadence d'horloge présentent un pré-échelonneur (9) doté d'au moins un registre (11), le ou les registres (11) présentant chacun un rapport de division.

5. Appareil de commande selon l'une des revendications précédentes, **caractérisé en ce que** le processeur présente des moyens de formation de niveaux différents pour la ou des cadences d'horloge.
